# FASCICULE DE BREVET EUROPEEN

(11) **EP 0 715 696 B1**
(45) Date de publication et mention de la délivrance du brevet: **03.06.1998**
(21) Numéro de dépôt: 95924390.8
(22) Date de dépôt: 30.06.1995
(51) Int. Cl.: F16F 15/139, F16F 15/167

(54) **VOLANT AMORTISSEUR DESTINE A ETRE INTERPOSE DANS UN GROUPE MOTOPROPULSEUR DE VEHICULE AUTOMOBILE**
DÄMPFUNGSSCHWUNGRAD, GEDACHT ZUM EINBAU IN EINER ANTRIEBSEINHEIT EINES KRAFTFAHRZEUGES
DAMPING FLYWHEEL FOR A MOTOR VEHICLE POWER UNIT

(30) Priorité: 30.06.1994 FR 9408257
(43) Date de publication de la demande: 12.06.1996
(73) Titulaire: VALEO, 75017 Paris (FR)
(72) Inventeur: DUCLOS, Didier, F-77330 Ozoir-la-Ferrière (FR); FEIGLER, Jacques, F-95350 Saint-Brice-sur-Forêt (FR)
(74) Mandataire: Gamonal, Didier
(86) Numéro de dépôt international: FR9500877
(87) Numéro de publication internationale: WO9600860

(56) Documents cités:
- DE-A- 3 721 712
- GB-A- 2 219 647
- GB-A- 2 251 284
- GB-A- 2 269 440

## Description

La présente invention concerne un volant amortisseur agencé entre deux ensembles tournants coaxiaux, dont l'un est destiné à être relié au moteur à combustion interne d'un groupe motopropulseur, notamment de véhicule automobile, et dont l'autre est destiné à être relié à l'arbre d'entrée de la boîte de vitesses de ce groupe motopropulseur.

L'invention concerne notamment un volant amortisseur du type de celui décrit et représenté dans le document FR-A-2 687 442 qui comporte un premier et un second éléments tournants coaxiaux en forme générale de plateaux parallèles qui définissent entre eux un logement annulaire étanche, délimité en majeure partie par le premier élément tournant et agencé radialement vers l'extérieur, qui reçoit un dispositif élastique d'amortissement à action circonférentielle et un agent de lubrification de ce dispositif, tel que de la graisse, et un espace annulaire, agencé radialement vers l'intérieur, qui reçoit au moins un dispositif d'amortissement à friction à action axiale.

Le dispositif élastique d'amortissement agit circonférentiellement entre les deux éléments tournants, tandis que le dispositif d'amortissement à friction agit axialement entre les deux éléments tournants en étant implantés au niveau du palier, tel qu'un roulement à billes ou un palier lisse, interposé radialement entre les deux éléments tournants, consistant usuellement en des masses, pour leur montage rotatif l'un par rapport à l'autre.

Il est souhaitable de lubrifier les différents composants du dispositif élastique d'amortissement et notamment les ressorts avec leurs zones de portée et il a déjà été proposé à cet effet de délimiter de manière étanche le logement annulaire qui reçoit le dispositif élastique d'amortissement, et de le séparer de l'espace annulaire qui reçoit le dispositif d'amortissement à friction, pour qu'il contienne un agent de lubrification qui ne puisse pas pénétrer radialement vers l'intérieur entre les deux éléments tournants pour ne pas affecter le bon fonctionnement du dispositif complémentaire d'amortissement à friction qui est agencé dans l'espace annulaire entre les deux éléments tournants.

Afin d'assurer l'étanchéité du logement, radialement vers l'intérieur, il a déjà été proposé dans le document DE-U-79.26142, des moyens d'étanchéité qui comportent deux rondelles d'étanchéité coaxiales dont chacune est en appui par l'une de ses faces contre une première surface de portée associée au premier élément tournant et par l'autre de ses faces contre une seconde surface de portée associée au second élément tournant.

Dans le mode de réalisation proposé dans ce document, chacune des surfaces de portée est constituée par un joint torique annulaire agencé dans une gorge annulaire usinée à cet effet dans une portion de surface en vis-à-vis de l'un ou l'autre des deux éléments tournants et chaque rondelle est maintenue radialement par simple contact de friction de ses faces opposées avec les deux joints toriques correspondants.

L'agencement des moyens d'étanchéité proposés dans ce document est particulièrement complexe et coûteux en ce qu'il fait appel à des composants nombreux, en ce qu'il nécessite de prévoir l'usinage de gorges de dimensions précises pour les joints toriques d'étanchéité et en ce que l'assemblage des différents composants afin d'assurer le positionnement correct des rondelles entre leurs joints correspondants est particulièrement difficile à réaliser et à automatiser.

Afin de remédier à ces inconvénients, il a déjà été proposé dans le document FR 93 15571 déposé le 23 Décembre 1993 et non publié à ce jour, que chaque rondelle soit montée comprimée axialement entre ses deux surfaces de portée et soit susceptible de prendre appui radialement par l'un de ses bords circulaires contre un épaulement formé en vis-à-vis sur l'un des deux éléments tournants.

Un tel agencement est satisfaisant, notamment en ce qu'il permet de limiter l'encombrement radial vers l'intérieur des rondelles d'étanchéité et permet l'agencement de deux dispositifs d'amortissement à friction concentriques, mais la mise en place des rondelles et l'assemblage des différents composants ne sont pas aussi aisés que désiré à réaliser, les rondelles n'étant maintenues en aucune manière par rapport aux différents composants jusqu'à l'assemblage final.

La présente invention a pour but de proposer un volant amortisseur du type défini par le préambule de la revendication 1 et connu du DE-A-3 721 712 (figure 20) dont la structure des moyens d'étanchéité du logement annulaire soit particulièrement simple et permette notamment de simplifier le montage des rondelles et l'assemblage des différents composants.

Dans ce but, l'invention propose un volant amortisseur, caractérisé en ce que le dispositif d'amortissement à friction comporte une partie entraînée en rotation par le second élément tournant par l'intermédiaire d'au moins une tête d'un organe de fixation d'une des rondelles d'étanchéité sur un disque annulaire du second élément tournant, et en ce que ledit disque est fixé sur le second élément tournant par une série d'organes de liaison distincts des organes de fixation.

Grâce à l'invention le disque du second élément tournant forme avec sa rondelle d'étanchéité associée un ensemble manipulable, transportable et imperdable facilitant la réduction du stockage des pièces et le montage du volant amortisseur. Cet ensemble permet également d'éliminer les erreurs en ce qui concerne la rondelle d'étanchéité à monter.

En outre la rondelle d'étanchéité est ménagée car elle n'est pas fixée par les organes de liaison. De plus l'organe de fixation a, de manière économique, une double fonction permettant de ménager la fixation du disque au bénéfice d'une grande robustesse du volant amortisseur.

Avantageusement le second élément tournant est creusé pour éviter toute interférence avec le pied des organes de fixation.

Avantageusement les organes de fixation permettent également de fixer la deuxième rondelle d'étanchéité au disque du second élément tournant, ladite seconde rondelle d'étanchéité étant pincée entre le disque et les pieds des organes de fixation.

Il est ainsi possible de fabriquer à part un ensemble disque - rondelles d'étanchéité et de l'assembler en final sans difficulté.

Selon d'autres modifications de l'invention définie par la revendication 1:
- le second élément tournant comporte un disque annulaire qui s'étend à l'intérieur de l'espace annulaire et du logement annulaire et dont les faces annulaires opposées constituent lesdites secondes surfaces de portée, l'organe de fixation étant monté sur le disque annulaire ;
- l'organe de fixation est de manière simple et économique un rivet ; ce rivet comporte une tête élargie pour entraînement de la partie concernée du dispositif d'amortissement de friction ;
- un bord radial interne de ladite rondelle d'étanchéité est pincé entre la tête de l'organe de fixation et la seconde surface de portée avec laquelle elle coopère ;
- le bord radial interne de ladite rondelle d'étanchéité est traversé par le corps de l'organe de fixation ;
- il est prévu une série d'organes de fixation de ladite rondelle d'étanchéité répartis angulairement et dont les têtes entraînent en rotation la partie du dispositif d'amortissement à friction ;
- le disque annulaire est fixé au second élément tournant en forme de plateau par une série d'organes de liaison répartis angulairement ;
- les organes de liaison et les organes de fixation sont agencés sensiblement sur un même cercle en étant distincts ;
- l'autre des deux rondelles d'étanchéité peut être fixée sur le second élément tournant ;
- le bord radial interne de ladite autre rondelle d'étanchéité est pincé entre le disque annulaire et une surface de portée formée sur le second élément tournant;
- les organes de liaison sont des rivets.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section axiale selon la ligne 1-1 de la figure 3 d'un exemple de réalisation d'un volant amortisseur conforme aux enseignements de l'invention ;
- la figure 2 est une vue à plus grande échelle du détail A de la figure 1 ; et
- la figure 3 est une vue partielle de droite, illustrée partiellement en section selon la ligne 3-3 de la figure 1 du volant amortisseur illustré sur cette figure.

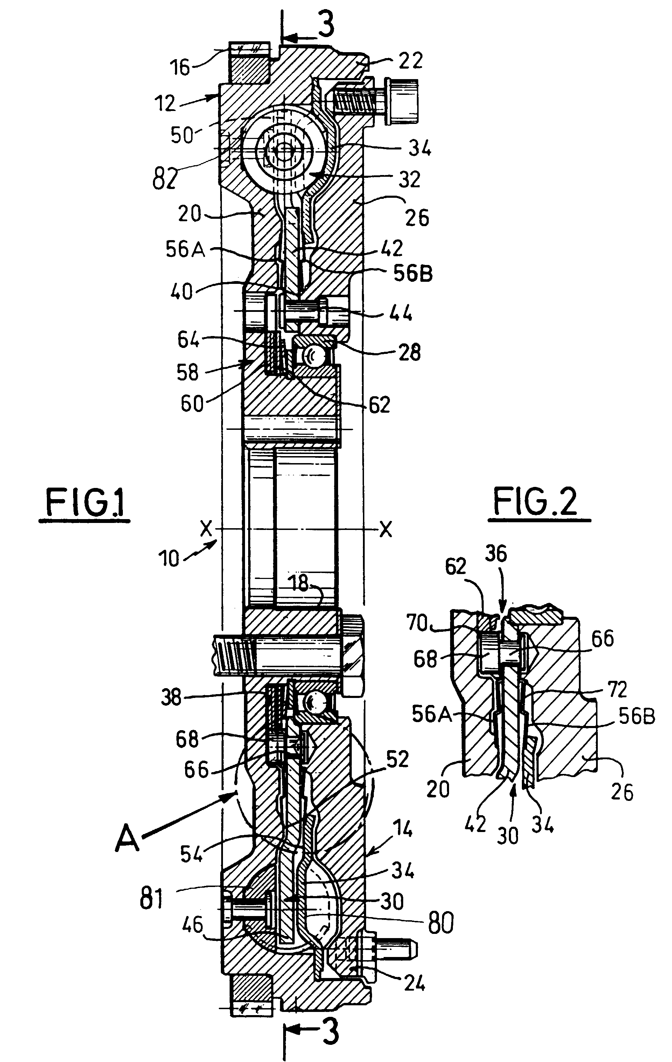

On a représenté sur les figures 1 à 3 un volant amortisseur 10 qui est pour l'essentiel constitué par un premier élément tournant 12 et un second élément tournant 14, qui sont susceptibles de tourner l'un par rapport à l'autre autour d'un axe X-X.

Les éléments tournants 12,14 consistent ici, de manière connue en soi, en des masses coaxiales montées mobiles l'une par rapport à l'autre à l'encontre d'un dispositif élastique d'amortissement 32 à action circonférentielle et d'un dispositif d'amortissement à friction 58 à action axiale.

Le premier élément 12, ici en forme générale de plateau, comporte une couronne extérieure dentée 16 prévue pour coopérer avec un démarreur d'un groupe motopropulseur (non représenté) et un moyeu central 18, réalisé en une seule pièce avec le plateau 12, prévu pour être fixé sur l'extrémité d'un vilebrequin du moteur (non représenté).

L'élément tournant 12 est constitué pour l'essentiel par un plateau 20 et par une jupe annulaire périphérique cylindrique 22, d'orientation axiale, qui entoure partiellement une jupe annulaire périphérique cylindrique 24, qui prolonge axialement la partie principale en forme de plateau 26 de l'élément tournant 14, qui est montée à rotation sur le moyeu 18 par l'intermédiaire ici d'un roulement à billes 28 ou en variante par un autre palier par exemple du type palier lisse.

Les plateaux 20, 26 et les jupes 22 et 24 délimitent un logement annulaire 30 qui est prévu pour recevoir, selon une conception connue, le dispositif élastique d'amortissement 32 constitué par un ensemble de ressorts hélicoidaux, ici concentriques, agencés en couronne.

Ce logement 30 est délimité ici en majeure partie par le plateau 20, la jupe 22 et un disque 34 du premier élément tournant 12.

A sa périphérie interne ce logement laisse apparaître une légère fente dans laquelle pénètre un disque 42 du second élément tournant 14 et ce à étanchéité de manière décrite ci-après.

Le premier élément tournant 12 comporte également le disque radial interne 34 qui s'étend radialement vers l'intérieur depuis la jupe 22 entre les deux plateaux 20,26 en direction d'un espace annulaire 36 délimité entre les portions de faces planes en vis-à-vis 38 et 40 des plateaux 20 et 26.

Le disque 34 est lié en rotation à la jupe extérieure 22 par sertissage étanche comme décrit dans le document FR-A-2 695 579. Pour ce faire la jupe présente une gorge destinée à recevoir le métal du disque 34 métallique, lors du matriçage de celui-ci.

En variante cette fixation étanche peut être réalisée par vissage comme décrit dans le document FR-A-2 687 442. En variante on peut procéder à un rivetage ou à un soudage. Ce disque 34 délimite en partie le logement 30, le plateau 26 étant creusé pour logement du disque 34, qui est embouti localement en 80, tel que visible à la figure 1, pour appui des extrémités circonférentielles des ressorts hélicoidaux du dispositif 32.

En regard de ces emboutis 80 le plateau 20 présente des plaquettes 81 fixées par rivetage (telles que visibles dans la partie basse de la figure 1) pour appui des extrémités circonférentielles desdits ressorts.

Le second élément tournant 14 comporte également un disque intérieur 42 qui lui est lié en rotation par des rivets 44, et qui s'étend radialement dans l'espace annulaire 36 et dans le logement annulaire 30.

Le second élément tournant 14 forme à l'aide de son plateau 26, de manière connue en soi, le plateau de réaction d'un embrayage. Ainsi ce second élément 14 est destiné à être calé en rotation sur l'arbre d'entrée de la boîte de vitesses par l'intermédiaire d'un disque de friction de l'embrayage, dont les garnitures de frottement sont destinées à être pincées entre le plateau de réaction 26 et un plateau de pression, non représenté, appartenant à un mécanisme d'embrayage destiné par son couvercle à être rapporté par des vis, dont une est visible dans la partie haute de la figure 1 sur le plateau de réaction 26.

Le bord extérieur 46 du disque intérieur 42 comporte des pattes radiales extérieures 50 prévues pour servir de butées aux extrémités des ressorts du dispositif élastique d'amortissement 32.

Ainsi les ressorts, prenant appui sur les plaquettes 81 et les emboutis 82 du disque 34, ici par l'intermédiaire de plots d'appui 83 de manière connue en soi, sont destinés à être comprimés par les pattes 50 pénétrant dans le logement 30. On notera que des pièces 82 anti-usure, ici en forme de goulotte, sont interposées radialement entre les ressorts 32 et la jupe 22.

La partie périphérique du disque 42 s'étend entre une portion de surface en vis-à-vis 52 du plateau 20 et une portion de surface en vis-à-vis 54 du disque radial interne 34 de l'élément tournant 12.

Ainsi les pattes 50 pénètrent à l'intérieur du logement 30, un faible intervalle existant entre le plateau 20 et le disque 34 pour pénétration du disque 42.

L'étanchéité interne du logement annulaire 30, et sa séparation de l'espace annulaire 36, est assurée par deux rondelles 56A et 56B d'étanchéité.

Les deux rondelles 56A et 56B sont deux pièces annulaires en tôle découpée et emboutie et ferment donc le logement 30 à sa périphérie interne, ledit logement étant rempli partiellement de graisse pour lubrifier les ressorts du dispositif 32.

Comme on peut le voir sur la figure 2, le bord radial extérieur de la rondelle 56A coopère et est en appui élastique contre une surface de portée formée en vis-à-vis dans le plateau 20 du premier élément tournant 12, tandis que le bord radial extérieur de la seconde rondelle d'étanchéité 56B coopère et est en appui élastique contre une surface de portée formée en vis-à-vis sur le disque 34 du premier élément tournant 12.

Les rondelles 56A et 56B sont disposées selon l'invention de part et d'autre du disque 42 en étant accolées à celui-ci.

Le volant amortisseur 10 comporte également un dispositif d'amortissement à friction 58, de structure connue. Ce dispositif 58 entoure le moyeu 13 et comporte une première partie 60 constituée par un anneau en matériau de friction, qui est destiné à frotter sur une portion de la surface plane 38 du plateau 20 du premier élément 12, et par une seconde partie 62 qui est constituée par une rondelle, ici métallique, entraînée en rotation, éventuellement après rattrapage d'un jeu, par le second élément tournant 14. Une rondelle élastique 64, qui sollicite élastiquement la rondelle 62 en appui contre l'anneau de friction 60, est également prévue.

La rondelle 64, du type rondelle Belleville, en variante une rondelle du type rondelle ondulée, prend appui sur un anneau calé axialement sur la bague interne du roulement 28 montée sur le moyeu 18. Ce moyeu 18 est doté de trous de passage pour des vis de fixation du volant sur le vilebrequin du moteur. Une telle vis est visible dans la partie centrale de la figure 1.

Ainsi le volant est agencé entre deux ensembles tournants dont l'un (le vilebrequin) est relié au moteur à combustion interne et dont l'autre est relié à l'arbre d'entrée de la boîte de vitesses.

L'anneau 60 est fixé sur la rondelle 62, ici par collage. Ainsi l'anneau 60 est destiné à être serré axialement entre la rondelle 62, formant rondelle de répartition, et la portion de la surface 38.

Conformément aux enseignements de l'invention, la rondelle 62 est entraînée en rotation par les têtes 68 d'une série de rivets 66, qui sont fixés sur le disque annulaire intérieur 42 du second élément tournant 14.

Conformément à l'invention, et comme on peut le voir sur la figure 2, le bord radial interne 70 de la rondelle d'étanchéité 56A est pincé entre la tête 68 de chaque rivet 66 et la portion de surface plane en vis-à-vis du disque annulaire 42 du second élément tournant 14.

Ainsi selon l'invention la première rondelle d'étanchéité est fixée sur le disque 42.

Le bord radial interne 70 comporte à cet effet également une série de trous correspondants traversés par les corps des rivets 66.

Cet agencement permet, outre l'entraînement en rotation de la rondelle 62, d'assurer la fixation de la rondelle d'étanchéité 56A sur le disque annulaire 42, et donc sur le second élément tournant 14, la coopération du bord radial interne de la rondelle 56A avec une surface de portée agencée en vis-à-vis sur le disque annulaire 42 assurant l'étanchéité du logement annulaire 30.

Cette conception permet d'assurer le montage et la fixation de la rondelle d'étanchéité 56A sur le disque annulaire 42 du second élément tournant 14 avant la fixation du disque annulaire 42 sur le plateau 26 du second élément tournant 14 au moyen de la série de rivets de liaison 44.

Avantageusement selon l'invention ces rivets 44, distincts des rivets 66, assurent uniquement la fixation du disque 42 sans assurer la fixation de la rondelle d'étanchéité 56A, qui est ainsi ménagée.

Avantageusement la deuxième rondelle d'étanchéité 56B est fixée de la même manière que la rondelle 56A à l'aide des organes de fixation 66.

Ainsi le bord radial interne 72 de la rondelle 56B est pincé entre le pied de chaque rivet 66 et la portion en vis-à-vis du disque 42.

Ce bord radial interne 72 présente des trous traversés par les corps des rivets 66.

Ainsi les bords radiaux des rondelles d'étanchéité 56A,56B s'étendent au contact du disque 42 de part et d'autre de celui-ci, l'ensemble formant un ensemble manipulable, transportable et imperdable.

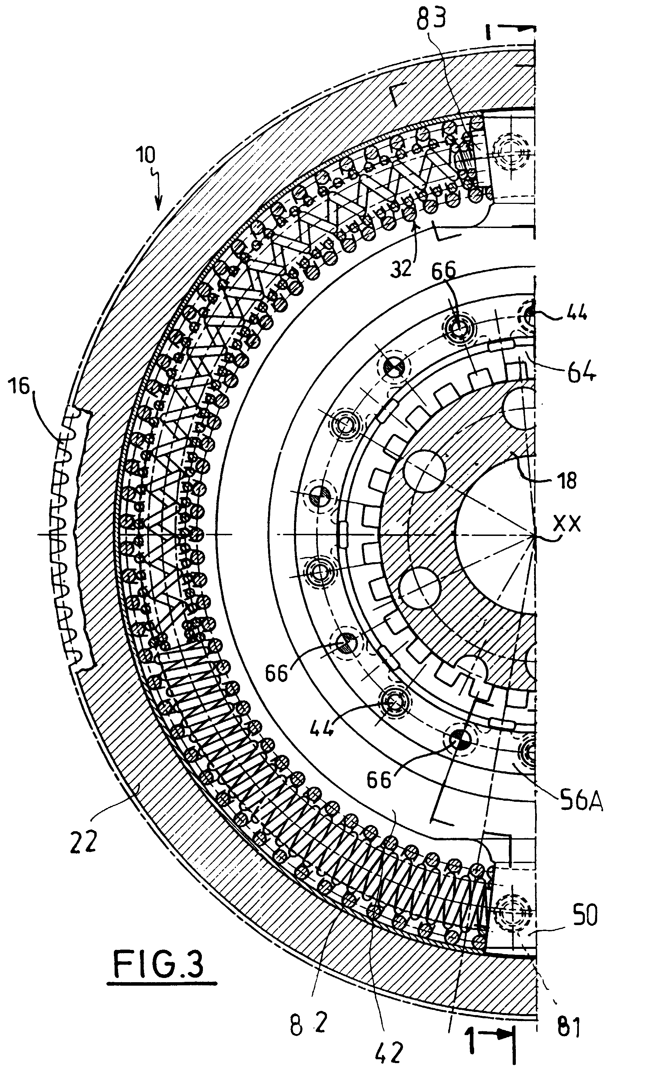

Comme on peut le voir sur la figure 3, les rivets de fixation 66 et les rivets de liaison 44 sont avantageusement agencés sensiblement sur un même cercle et alternés régulièrement le long de ce cercle.

Dans le mode de réalisation illustré sur les figures, le bord radial interne 72 de la rondelle d'étanchéité 56B coopère de manière étanche, par appui élastique, avec une surface de portée formée en vis-à-vis sur le disque annulaire 42 du second élément tournant 14 assurant ainsi l'étanchéité du logement 30.

Selon une variante de réalisation qui n'est pas représentée sur les figures, il est possible de prévoir que la rondelle d'étanchéité 56B soit également fixée au second élément tournant 14 en pinçant son bord radial intérieur 72 entre le disque annulaire intérieur 42 et la portion de surface plane 40 en vis-à-vis formée sur le plateau 26.

On notera que le second élément tournant 14 présente des creusures en regard des pieds des rivets 66 pour permettre le passage desdits pieds, le disque 42 permettant le calage de la bague externe du roulement 28 entre un épaulement du second élément 14 et la périphérie interne du disque 42 trouée centralement.

Ainsi pour mémoire on rappellera que, lors du fonctionnement du volant amortisseur, les ressorts du dispositif 32 sont admis à être comprimés entre les bras 50, les plaquettes 81 du plateau 20 et les emboutis 80 du disque 34 du premier élément tournant 12. Au cours de ce mouvement, la tête 68 des rivets entraîne en rotation la rondelle 62, laquelle entraîne la rondelle 60 avec apparition d'un frottement au contact de la surface 38.

Bien entendu la présente invention n'est pas limitée à l'exemple de réalisation décrit. En particulier, la rondelle 62 pourrait, comme divulgué dans le document FR-A-2 687 442, être liée en rotation au moyeu 18 par un montage du type à cannelures, ladite rondelle 62 présentant alors à sa périphérie interne des dents engagées, éventuellement à jeu, dans des cannelures ménagées à la périphérie externe du moyeu 18.

En variante le calage en rotation de la rondelle 62 sur le moyeu 18 pourrait être réalisé à l'aide de méplats.

L'anneau 60 présenterait alors à sa périphérie externe des échancrures pour pénétration des têtes 68 des rivets et entraînement en rotation de l'anneau 60, éventuellement après rattrapage d'un jeu, par le second élément tournant. Cela est rendu possible par la forme de la tête 68, qui est relativement longue en étant en forme de pion.

De même à la figure 1, on peut coller l'anneau 60 sur le plateau 20 et non sur la rondelle 62. Un frottement se produit alors entre les rondelles 60,62. Bien entendu on peut monter de manière libre la rondelle 60 entre le plateau 20 et la rondelle 62.

La forme des rondelles 56A,56B peut être différente sachant que lesdites rondelles sont destinées ici à être fixées de préférence à leur périphérie interne sur le disque 42 à l'aide des rivets 66, tandis que par leur périphérie externe elles sont destinées à venir en appui respectivement sur le plateau 20 et sur une portée ménagée à la périphérie interne du disque 34.

Par leur rebord radial externe ces rondelles 56A,56B sont donc en appui contre une première surface de portée associée au premier élément tournant. Par leur bord radial incliné ces rondelles 56A,56B sont en appui contre une seconde surface de portée offerte par le disque 42 associée au second élément tournant 14.

On notera que dans les figures la périphérie interne des rondelles 56A,56B est décalée axialement par rapport à la périphérie externe desdites rondelles.

Un jeu existe entre le disque 42 et la périphérie externe des rondelles d'étanchéité.

Bien entendu le nombre des rivets 66 dépend des applications. De préférence plusieurs rivets 66 sont utilisés.

## Revendications

1. Volant amortisseur (10) agencé entre deux ensembles tournants coaxiaux (12,14) dont l'un est destiné à être relié au moteur à combustion interne d'un groupe motopropulseur, notamment de véhicule automobile, et dont l'autre est destiné à être relié à l'arbre d'entrée de la boîte de vitesses de ce groupe motopropulseur, du type comportant un premier (12) et un second (14) éléments tournants coaxiaux en forme générale de plateaux (20, 26) parallèles qui définissent entre eux un logement annulaire (30), délimité en majeure partie par le premier élément tournant (12) et agencé radialement vers l'extérieur, qui reçoit un dispositif élastique d'amortissement (32) à action circonférentielle et un agent de lubrification de ce dispositif (32), et un espace annulaire (36), agencé radialement vers l'intérieur, qui reçoit un dispositif d'amortissement à friction (58) à action axiale, et du type comportant des moyens d'étanchéité qui séparent le logement (30) et l'espace (36) annulaires et qui comportent deux rondelles d'étanchéité (56A, 56B) coaxiales, dont chacune est en appui par l'une de ses faces contre une première surface de portée associée au premier élément tournant (12) et par l'autre de ses faces contre une seconde surface de portée associée au second élément tournant (14), dans lequel le second élément tournant (14) comporte un disque annulaire (42) qui s'étend à l'intérieur de l'espace annulaire (36) et qui pénètre par sa périphérie externe dans le logement annulaire (30), caractérisé en ce que le dispositif d'amortissement à friction (58) comporte une partie (62,60) entraînée en rotation par le second élément tournant (14) par l'intermédiaire d'au moins une tête (68) d'un organe (66) de fixation d'une (56A) des rondelles d'étanchéité (56A, 56B) sur le disque annulaire (42) du second élément tournant (14), et en ce que le disque annulaire (42) du second élément tournant (14) est fixé sur ledit second élément (14) par une série d'organes de liaison (44) distincts des organes de fixation (66).

2. Volant amortisseur selon la revendication 1, caractérisé en ce que les faces annulaires opposées du disque annulaire (42) constituent lesdites secondes surfaces de portée, et en ce que l'organe de fixation (66) est monté sur le disque annulaire (42).

3. Volant amortisseur selon la revendication 2, caractérisé en ce que l'organe de fixation (66) est un rivet.

4. Volant amortisseur selon la revendication 2 ou 3, caractérisé en ce que le bord radial interne (70) de ladite rondelle d'étanchéité (56A) est pincé entre la tête que présente chaque organe de fixation (66) et la seconde surface de portée avec laquelle elle coopère.

5. Volant amortisseur selon la revendication 4, caractérisé en ce que le bord radial interne (70) de ladite rondelle d'étanchéité (56A) est traversé par le corps de l'organe de fixation (66).

6. Volant amortisseur selon la revendication 5, caractérisé en ce que le second élément tournant (14) est creusé pour éviter toute interférence avec le pied que présente chaque organe de fixation (66).

7. Volant amortisseur selon l'une quelconque des revendications 1 à 6, caractérisé en ce qu'il est prévu une série d'organes (66) de fixation de ladite rondelle d'étanchéité (56A) répartis angulairement et présentant des têtes (68) entraînant en rotation la partie (62) du dispositif d'amortissement à friction (58).

8. Volant amortisseur selon la revendication 7, caractérisé en ce que les dites têtes sont en forme de pions.

9. Volant amortisseur selon l'une quelconque des revendications 1 à 8, dans lequel les rondelles d'étanchéité (56A,56B) sont disposées de part et d'autre du disque annulaire (42) du second élément tournant (14), caractérisé en ce que la deuxième rondelle d'étanchéité (56B) est fixée sur le disque annulaire (42) du second élément tournant (14) à l'aide des organes de fixation (68), le bord radial interne (72) de ladite rondelle d'étanchéité (56B) étant pincé entre le pied que présente chaque organe de fixation (66) et la seconde surface de portée avec laquelle elle coopère.

10. Volant amortisseur selon l'une quelconque des revendications 1 à 9, caractérisé en ce que le disque annulaire (62) est fixé au second élément tournant (14, 26) en forme de plateau par une série d'organes de liaison (44) répartis angulairement et en ce que les organes de liaison (44) et les organes de fixation (66) sont agencés sensiblement sur un même cercle.

11. Volant amortisseur selon la revendication 8, caractérisé en ce que les organes de liaison (44) sont des rivets.

12. Volant amortisseur selon l'une quelconque des revendications 1 à 11, caractérisé en ce que la dite partie (60, 62) du dispositif d'amortissement à friction (58) comporte un anneau (60) en matériaux de friction destiné à frotter sur une portion de surface plane (38) du plateau (20) du premier élément tournant (12) et à être entraîné en rotation, éventuellement après rattrapage d'un jeu, directement ou indirectement par les têtes (68) que présente les organes de fixation (66).

13. Volant amortisseur selon la revendication 12, caractérisé en ce que l'anneau de friction (60) présente à sa périphérie externe des échancrures pour pénétration des têtes des organes de fixation (66).

## Patentansprüche

1. Dämpfungsschwungrad (10), das zwischen zwei koaxialen umlaufenden Einheiten (12, 14) angeordnet ist, von denen eine für die Verbindung mit dem Verbrennungsmotor einer Antriebseinheit, insbesondere eines Kraftfahrzeugs, bestimmt ist, während die andere für die Verbindung mit der Eingangswelle des Getriebes dieser Antriebseinheit bestimmt ist, in der Ausführung mit einem ersten (12) und einem zweiten (14) koaxialen umlaufenden Element in der allgemeinen Form von parallelen Platten (20, 26), die, zwischen ihnen liegend, eine zum größten Teil durch das erste umlaufende Element (12) begrenzte und radial nach außen angeordnete ringförmige Aufnahme (30), die eine umfangsmäßig wirksame elastische Dämpfungsvorrichtung (32) und ein Schmiermittel für diese Vorrichtung (32) aufnimmt, und einen radial nach innen angeordneten ringförmigen Zwischenraum (36) definieren, der eine axial wirksame Reibungsdämpfungsvorrichtung (58) aufnimmt, und in der Ausführung mit Dichtungsmitteln, die die ringförmige Aufnahme (30) und den ringförmigen Zwischenraum (36) trennen und die zwei koaxiale Dichtungsscheiben (56A, 56B) umfassen, die jeweils mit einer ihrer Flächen an einer zum ersten umlaufenden Element (12) gehörenden ersten Sitzfläche und mit ihrer anderen Fläche an einer zum zweiten umlaufenden Element (14) gehörenden zweiten Sitzfläche zur Auflage kommen, wobei das zweite umlaufende Element (14) eine ringförmige Scheibe (42) umfaßt, die sich im Innern des ringförmigen Zwischenraums (36) erstreckt und die mit ihrem äußeren Umfang in die ringförmige Aufnahme (30) eindringt, **dadurch gekennzeichnet**, daß die Reibungsdämpfungsvorrichtung (58) einen Teil (62, 60) umfaßt, der durch das zweite umlaufende Element (14) über mindestens einen Kopf (68) eines Befestigungsorgans (66) zur Befestigung einer (56A) der Dichtungsscheiben (56A, 56B) an der ringförmigen Scheibe (42) des zweiten umlaufenden Elements (14) drehend mitgenommen wird, und daß die ringförmige Scheibe (42) des zweiten umlaufenden Elements (14) an dem besagten zweiten Element (14) durch eine Reihe von Verbindungsorganen (44) befestigt ist, die von den Befestigungsorganen (66) verschieden sind.

2. Dämpfungsschwungrad nach Anspruch 1, **dadurch gekennzeichnet**, daß die gegenüberliegenden ringförmigen Flächen der ringförmigen Scheibe (42) die besagten zweiten Sitzflächen bilden und daß das Befestigungsorgan (66) an der ringförmigen Scheibe (42) angebracht ist.

3. Dämpfungsschwungrad nach Anspruch 2, **dadurch gekennzeichnet**, daß das Befestigungsorgan (66) ein Niet ist.

4. Dämpfungsschwungrad nach Anspruch 2 oder 3 , **dadurch gekennzeichnet**, daß die innere radiale Kante (70) der besagten Dichtungsscheibe (56A) zwischen dem Kopf, den jedes Befestigungsorgan (66) aufweist, und der zweiten Sitzfläche, mit der sie zusammenwirkt, eingeklemmt ist.

5. Dämpfungsschwungrad nach Anspruch 4, **dadurch gekennzeichnet**, daß der Körper des Befestigungsorgans (66) durch die innere radiale Kante (70) der besagten Dichtungsscheibe (56A) hindurchgeht.

6. Dämpfungsschwungrad nach Anspruch 5, **dadurch gekennzeichnet**, daß das zweite umlaufende Element (14) vertieft ist, um jede Überlagerung mit dem Fuß zu verhindern, den jedes Befestigungsorgan (66) aufweist.

7. Dämpfungsschwungrad nach einem der Ansprüche 1 bis 6, **dadurch gekennzeichnet**, daß eine Reihe von Befestigungsorganen (66) zur Befestigung der besagten Dichtungsscheibe (56A) vorgesehen ist, die winklig verteilt sind und Köpfe (68) aufweisen, die den Teil (62) der Reibungsdämpfungsvorrichtung (58) drehend mitnehmen.

8. Dämpfungsschwungrad nach Anspruch 7, **dadurch gekennzeichnet**, daß die besagten Köpfe in Form von Stiften ausgebildet sind.

9. Dämpfungsschwungrad nach einem der Ansprüche 1 bis 8, bei dem die Dichtungsscheiben (56A, 56B) beiderseits der ringförmigen Scheibe (42) des zweiten umlaufenden Elements (14) angeordnet sind,**dadurch gekennzeichnet**, daß die zweite Dichtungsscheibe (56B) an der ringförmigen Scheibe (42) des zweiten umlaufenden Elements (14) anhand der Befestigungsorgane (68) befestigt ist, wobei die innere radiale Kante (72) der besagten Dichtungsscheibe (56B) zwischen dem Fuß, den jedes Befestigungsorgan (66) aufweist, und der zweiten Sitzfläche, mit der sie zusammenwirkt, eingeklemmt ist.

10. Dämpfungsschwungrad nach einem der Ansprüche 1 bis 9, **dadurch gekennzeichnet**, daß die ringförmige Scheibe (62) am zweiten umlaufenden Element (14, 26) in Form einer Platte durch eine Reihe von winklig verteilten Verbindungsorganen (44) befestigt ist und daß die Verbindungsorgane (44) und die Befestigungsorgane (66) in etwa auf einem gleichen Kreis angeordnet sind.

11. Dämpfungsschwungrad nach Anspruch 8,**dadurch gekennzeichnet**, daß die Verbindungsorgane (44) Niete sind.

12. Dämpfungsschwungrad nach einem der Ansprüche 1 bis 11, **dadurch gekennzeichnet**, daß der besagte Teil (60, 62) der Reibungsdämpfungsvorrichtung (58) einen Ring (60) aus Friktionswerkstoff umfaßt, der dazu bestimmt ist, an einer ebenen Teilfläche (38) der Platte (20) des ersten umlaufenden Elements (12) in Reibung zu treten und, gegebenenfalls nach Beseitigung eines Spiels, direkt oder indirekt durch die Köpfe (68) mitgenommen zu werden, die die Befestigungsorgane (66) aufweisen.

13. Dämpfungsschwungrad nach Anspruch 12 , **dadurch gekennzeichnet**, daß der Reibring (60) an seinem äußeren Umfang Aussparungen für das Eindringen der Köpfe der Befestigungsorgane (66) aufweist.

## Claims

1. A damped flywheel (10) arranged operatively between two coaxial rotatable assemblies (12, 14), one of which is adapted to be coupled to the internal combustion engine of a propulsion unit, especially for a motor vehicle, the other one being adapted to be coupled to the input shaft of the gearbox of the said propulsion unit, and of the type comprising a first rotating element (12) and a second rotating element (14), which are coaxial and have the general form of parallel plates (20, 26) that define between them an annular housing (30), which is delimited mainly by the first rotating element (12) and which is disposed radially towards the outside and receives a circumferentially acting resilient damping device (32) and a lubricating agent for the said device (32), and an annular space (36) arranged radially towards the inside, which receives an axially acting friction damping device (58), and of the type comprising sealing means which separate the annular housing (30) and space (36), and which comprises two coaxial sealing rings (56A, 56B), each of which is in engagement through one of its faces against a first support surface associated with the first rotating element (12), and through the other one of its faces against a second support surface associated with the second rotating element (14), wherein the second rotating element (14) comprises an annular disc (42) which extends into the annular space (36) and which penetrates through its outer periphery into the annular housing (30), characterised in that the friction damping device (58) comprises a part (62, 60) which is driven in rotation by the second rotating element (14) through at least one interposed head (68) of a member (66) for fastening one (56A0 of the sealing rings (56A, 56B) on to the annular disc (42) of the second rotating element (14), and in that the annular disc (42) of the second rotating element (14) is fixed on the said second element (14) by means of a set of coupling members (44) which are distinct from the fastening members (66).

2. A damped flywheel according to Claim 1, characterised in that the opposed annular faces of the annular disc (42) constitute the said second support surfaces, and in that the fastening member (66) is mounted on the annular disc (42).

3. A damped flywheel according to Claim 2, characterised in that the fastening member (66) is a rivet.

4. A damped flywheel according to Claim 2 or Claim 3, characterised in that the internal radial edge (70) of the said sealing ring (56A) is gripped between the head that is part of each fastening member (66) and the second support surface with which it cooperates.

5. A damped flywheel according to Claim 4, characterised in that the body of the fastening member (66) extends through the internal radial edge (70) of the said sealing ring (56A).

6. A damped flywheel according to Claim 5, characterised in that the second rotating element (14) is recessed so as to prevent any interference with the foot that is part of each fastening member (66).

7. A damped flywheel according to any one of Claims 1 to 6, characterised in that a set of members (66) are provided for fastening the said sealing ring (56A), being spaced apart circumferentially and having heads (68) driving in rotation the said part (62) of the friction damping device (58).

8. A damped flywheel according to Claim 7, characterised in that the said heads are in the form of bosses.

9. A damped flywheel according to any one of Claims 1 to 8, in which the sealing rings (56A, 56B) are disposed on either side of the annular disc (42) of the second rotating element (14), characterised in that the second sealing ring (56B) is fixed on the annular disc (42) of the second rotating element (14) by means of fastening members (68), the internal radial edge (72) of the said sealing ring (56B) being gripped between the foot that is part of each fastening member (66) and the second support surface with which it cooperates.

10. A damped flywheel according to any one of Claims 1 to 9, characterised in that the annular disc (62) is fixed to the second rotating element (14, 26) in the form of a plate, by means of a set of coupling members (44) which are spaced apart circumferentially, and in that the coupling members (44) and the fastening members (66) are located substantially on a common pitch circle.

11. A damped flywheel according to Claim 8, characterised in that the coupling members (44) are rivets.

12. A damped flywheel according to any one of Claims 1 to 11, characterised in that the said part (60, 62) of the friction damping device (58) includes a ring (60) of friction material, adapted to rub on a flat surface portion (38) of the plate (20) of the first rotating element (12) and to be driven in rotation directly or indirectly, after any clearance has been taken up, by the heads (68) that are part of the fastening members (66).

13. A damped flywheel according to Claim 12, characterised in that the friction ring (60) has notches in its outer periphery, for penetration by the heads of the fastening members (66).
